# FASCICULE DE BREVET EUROPEEN

(11) **EP 3 994 302 B1**
(45) Date de publication et mention de la délivrance du brevet: **30.10.2024**
(21) Numéro de dépôt: 20785782.2
(22) Date de dépôt: 18.06.2020
(51) Int. Cl.: D03D 25/00, D03D 41/00, F01D 5/28, B29B 11/16, B29C 70/24

(54) **STRUCTURE FIBREUSE DE RENFORT DE PIECES EN MATERIAU COMPOSITE A EPAISSEUR VARIABLE**
FASERIGE VERSTÄRKUNGSSTRUKTUR FÜR TEILE AUS VERBUNDSTOFF MIT VARIABLER DICKE
FIBROUS REINFORCING STRUCTURE FOR PARTS MADE OF COMPOSITE MATERIAL WITH VARIABLE THICKNESS

(30) Priorité: 01.07.2019 FR 1907272
(43) Date de publication de la demande: 11.05.2022
(73) Titulaire: Safran Ceramics, 33185 Le Haillan (FR)
(72) Inventeur: PLANCKEEL, Aline, 77550 MOISSY-CRAMAYEL (FR); PHILIPPE, Eric, 77550 MOISSY-CRAMAYEL (FR); LEFEBVRE, Marie, 77550 MOISSY-CRAMAYEL (FR); BLACHIER, Jérémy, Paul, André, 77550 MOISSY-CRAMAYEL (FR)
(74) Mandataire: Cabinet Beau de Loménie
(86) Numéro de dépôt international: PCT/FR2020/051067
(87) Numéro de publication internationale: WO 2021/001611

(56) Documents cités:
- WO-A1-2015/004362
- WO-A1-2019/097147
- US-A1- 2017 298 745

## Description

### Domaine Technique

La présente invention concerne la réalisation de pièces en matériau composite et plus particulièrement la réalisation par tissage tridimensionnel (3D) ou multicouche de structures fibreuses de renfort pour de telles pièces.

### Technique antérieure

Un domaine d'application de l'invention est la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

L'invention concerne plus particulièrement les pièces en matériau composite comportant localement une ou plusieurs parties de surépaisseur comme c'est le cas par exemple de la partie centrale d'une pale d'aube de moteur aéronautique située entre le bord d'attaque et le bord de fuite de l'aube et qui correspond à une zone de plus forte épaisseur dans la pièce en matériau composite. Dans le cas d'une pièce en matériau composite présentant une épaisseur variable, le changement d'épaisseur est contrôlé au niveau de la structure fibreuse destinée à former le renfort de la pièce.

La réalisation d'aubes en matériau composite pour des turbomachines a déjà été proposée. On se référera notamment au document US 2011/0311368 qui décrit une solution consistant à augmenter le titre (donc la section transversale) des fils de chaîne dans les parties de surépaisseur dans la structure fibreuse afin de réduire la capacité de diminution d'épaisseur lors d'une mise en forme de la structure fibreuse 3D avec compression. Cependant, l'utilisation de fils de titre élevé augmente localement le taux de fibres dans la préforme. Si le taux de fibres est trop important, le réseau de porosité résultant peut ne pas être suffisant pour permettre un bon accès des constituants de la matrice au coeur de la préforme et pour obtenir, par conséquent, un matériau composite homogène présentant de bonnes propriétés mécaniques. En outre, le nombre de fils de trame restant constant dans la largeur de la texture, le fait d'avoir un nombre variable de fils de chaîne déséquilibre le ratio chaîne/trame qui est alors plus élevé dans la partie centrale épaisse et trop faible dans les parties latérales minces (bords d'attaque et de fuite). Un autre inconvénient de cette solution est que les fils de chaîne, qui sont en nombre plus importants dans la partie centrale, ne restent pas superposés mais s'étalent les uns à côté des autres. Ce phénomène limite la prise d'épaisseur de la texture dans la partie centrale de pale, ce qui peut être problématique pour obtenir la dimension souhaitée.

Le document WO 2015/004362 A1 divulgue une structure fibreuse de renfort de pièce en matériau composite selon le préambule de la revendication 1. 11

Le document US2017/298745 A1 divulgue une structure fibreuse dans laquelle des torons avec une taille supérieure par rapport à la taille des autres fils de la structure fibreuse s'étendent dans le logement suivant la direction longitudinale.

Il est donc souhaitable de pouvoir disposer de structures fibreuses 3D ou multicouches comportant des parties de surépaisseur ne présentant pas les inconvénients précités.

### Exposé de l'invention

A cet effet, l'invention propose, selon un premier objet, une structure fibreuse de renfort de pièce en matériau composite, ladite structure étant tissée en une seule pièce par tissage tridimensionnel ou multicouche entre une pluralité de couches de fils de trame et une pluralité de couches de fils de chaîne, la structure fibreuse s'étendant suivant une direction longitudinale correspondant au sens chaîne et suivant une direction transversale correspondant au sens trame caractérisée en ce que la structure fibreuse comprend suivant la direction transversale :
- des première et deuxième portions dans chacune desquelles toutes les couches de fils de chaîne sont liées entre elles par des fils de trame de la pluralité de couches de fils de trame, les première et deuxième portions formant respectivement des premier et deuxième bords longitudinaux de la structure fibreuse, et
- une troisième portion présente entre les première et deuxième portions, la troisième portion comprenant une zone de déliaison délimitant un logement à l'intérieur de la structure fibreuse s'étendant sur une distance déterminée suivant la direction longitudinale et suivant la direction transversale, la zone de déliaison séparant une première peau d'une deuxième peau, chacune des peaux comprenant une partie de couches de fils de chaîne liées entre elles par des fils de trame de la pluralité de fils de trame,
et en ce que des torons s'étendent dans le logement suivant la direction longitudinale, les torons ayant une taille supérieure ou égale à la taille des fils de chaîne de la pluralité de couches de fils de chaîne de manière à conférer à la troisième portion une épaisseur supérieure à l'épaisseur des première et deuxième portions.

La structure fibreuse ainsi proposée permet de conserver, dans une portion d'épaisseur plus importante, des peaux qui présentent un taux de fibres et un ratio chaîne/trame homogènes avec les autres portions de la structure fibreuse, à savoir un taux de fibres et un ratio chaîne/trame définis par les spécifications de fabrication. En outre, la structure fibreuse de l'invention autorise une grande souplesse dans le nombre et la taille des torons présents dans le logement délimité par la zone de déliaison car ceux-ci ne sont pas liés avec des fils de trame et n'ont pas besoin, par conséquent, de s'adapter au tissage choisi pour la structure fibreuse. Il est ainsi possible d'obtenir une portion de surépaisseur ayant des dimensions et/ou des formes très variées permettant de répondre aux différents besoin de conception de pièces en matériau composite.

Selon un aspect particulier de l'invention, les première et deuxième peaux comprennent le même nombre de couches de fils de chaîne et le même nombre de couches de fils de trame. La structure fibreuse présente ainsi de chaque côté des peux homogènes permettant de conférer des propriétés mécaniques équilibrées à la pièce finale en matériau composite.

Selon un autre aspect particulier de l'invention, les torons correspondent au moins en partie à des fils ayant un titre plus élevé que le titre des fils de chaîne de la pluralité de couches de fils de chaîne. Il est ainsi possible d'obtenir une variation d'épaisseur importante en utilisant un nombre réduit de torons.

Selon un autre aspect particulier de l'invention, les torons correspondent au moins en partie à des tresses ayant une section supérieure à la section des fils de chaîne de la pluralité de couches de fils de chaîne. L'utilisation de tresses permet d'obtenir une forte variation d'épaisseur tout en contrôlant le taux de fibres à coeur dans la troisième portion. En outre, grâce à leur structure tressée et leur géométrie tubulaire, les tresses permettent une très bonne infiltration à coeur de la structure fibreuse des constituants de la matrice.

Les torons présents dans le logement délimité par la zone de déliaison peuvent correspondre à un mélange de fils et de tresses.

L'invention a également pour objet une pièce en matériau composite comprenant un renfort fibreux densifié par une matrice, ledit renfort fibreux étant constitué par une structure fibreuse selon l'invention.

Cette pièce peut notamment correspondre à une aube de turbine, la première partie de la structure fibreuse constituant la partie de pied d'aube du renfort fibreux.

L'invention a encore pour objet un procédé de fabrication d'une structure fibreuse de renfort de pièce en matériau composite comprenant le tissage en une seule pièce par tissage tridimensionnel ou multicouche entre une pluralité de couches de fils de trame et une pluralité de couches de fils de chaîne, la structure fibreuse s'étendant suivant une direction longitudinale correspondant au sens chaîne et suivant une direction transversale correspondant au sens trame caractérisé en ce que, lors du tissage de la portion d'épaisseur décroissante, on définit suivant la direction transversale :
- des première et deuxième portions dans chacune desquelles toutes les couches de fils de chaîne sont liées entre elles par des fils de trame de la pluralité de couches de fils de trame, les première et deuxième portions formant respectivement des premier et deuxième bords longitudinaux de la structure fibreuse, et
- une troisième portion présente entre les première et deuxième portions, la troisième portion comprenant une zone de déliaison délimitant un logement à l'intérieur de la structure fibreuse s'étendant sur une distance déterminée suivant la direction longitudinale et suivant la direction transversale, la zone de déliaison séparant une première peau d'une deuxième peau, chacune des peaux comprenant une partie de couches de fils de chaîne liées entre elles par des fils de trame de la pluralité de fils de trame,
et en ce que des torons sont introduits dans le logement suivant la direction longitudinale, les torons ayant une taille supérieure ou égale à la taille des fils de chaîne de la pluralité de couches de fils de chaîne de manière à conférer à la troisième portion une épaisseur supérieure à l'épaisseur des première et deuxième portions.

Selon un aspect particulier de l'invention, les première et deuxième peaux comprennent le même nombre de couches de fils de chaîne et le même nombre de couches de fils de trame. La structure fibreuse présente ainsi de chaque côté des peux homogènes permettant de conférer des propriétés mécaniques équilibrée à la pièce finale en matériau composite.

Selon un autre aspect particulier de l'invention, les torons correspondent au moins en partie à des fils ayant un titre plus élevé que le titre des fils de chaîne de la pluralité de couches de fils de chaîne. Il est ainsi possible d'obtenir une variation d'épaisseur importante en utilisant un nombre réduit de torons.

Selon un autre aspect particulier de l'invention, les torons correspondent au moins en partie à des tresses ayant une section supérieure à la section des fils de chaîne de la pluralité de couches de fils de chaîne. L'utilisation de tresses permet d'obtenir une forte variation d'épaisseur tout en contrôlant le taux de fibres à coeur dans la troisième portion. En outre, grâce à leur structure tressée et leur géométrie tubulaire, les tresses permettent une très bonne infiltration à coeur de la structure fibreuse des constituants de la matrice.

Les torons présents dans le logement délimité par la zone de déliaison peuvent correspondre à un mélange de fils et de tresses.

### Brève description des dessins

[Fig. 1] La figure 1 est une vue schématique illustrant le tissage multicouche d'une structure fibreuse pour la fabrication d'une aube de moteur aéronautique conformément à un mode de réalisation de l'invention,
[Fig. 2] La figure 2 est une vue en coupe partielle en sens trame à échelle agrandie d'un ensemble de couches de fils montrant la formation d'un logement par une zone de déliaison dans l'ébauche de la figure 1 et le comblement du logement avec des torons,
[Fig. 3] La figure 3 est une vue en coupe partielle en sens trame à échelle agrandie d'un ensemble de couches de fils montrant une variante de réalisation de la zone de déliaison dans l'ébauche de la figure 1,
[Fig. 4] La figure 4 est une vue schématique en perspective d'une préforme fibreuse d'aube issue de la structure fibreuse de la figure 1,
[Fig. 5] La figure 5 est une vue schématique en perspective d'une aube en matériau composite obtenue par densification par une matrice de la préforme de la figure 4.

### Description des modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou de la céramique dans le cas de composites thermostructuraux. Pour le renfort fibreux, on peut utiliser notamment des fibres de carbone, de carbure de silicium ou d'oxyde.

La structure fibreuse de l'invention est obtenue par tissage tridimensionnel ou par tissage multicouche.

Par "tissage tridimensionnel" ou "tissage 3D", on entend ici un mode de tissage par lequel certains au moins des fils de chaîne lient des fils de trame sur plusieurs couches de trame.

Par "tissage multicouche", on désigne ici un tissage 3D avec plusieurs couches de trame dont l'armure de base de chaque couche est équivalente à une armure de tissu 2D classique, tel qu'une armure de type toile, satin ou sergé, mais avec certains points de l'armure qui lient les couches de trame entre elles.

La réalisation de la structure fibreuse par tissage 3D ou multicouche permet d'obtenir une liaison entre les couches, donc d'avoir une bonne tenue mécanique de la structure fibreuse et de la pièce en matériau composite obtenue, en une seule opération textile.

Il est avantageux de favoriser l'obtention, après densification, d'un état de surface exempt d'irrégularités importantes, c'est-à-dire un bon état de finition pour éviter ou limiter des opérations de finition par usinage ou pour éviter la formation d'amas de résine dans le cas de composites à matrice résine. A cet effet, dans le cas d'une structure fibreuse ayant une partie interne, ou coeur, et une partie externe, ou surface extérieure de la structure fibreuse, la surface est réalisée de préférence par tissage avec une armure de type toile, satin ou sergé afin de limiter les irrégularités de surface, une armure de type satin procurant en outre un aspect de surface lisse. Une variation d'armure de tissage en surface peut être réalisée à la surface extérieure de la structure fibreuse pour conférer des propriétés particulières voulues par exemple en passant d'une armure de type toile privilégiant une liaison serrée à une armure de type satin privilégiant un état de surface lisse.

Il est avantageux aussi pour obtenir des propriétés mécaniques aussi peu inhomogènes que possible au sein d'une pièce en matériau composite, de favoriser une densification de la structure fibreuse de renfort, avec un gradient de densification aussi faible que possible entre le coeur de la structure fibreuse et la surface de celle-ci, notamment dans le cas de densification CVI. A cet effet, pour favoriser l'accès au coeur de la préforme, le tissage à coeur peut être réalisé par tissage interlock, qui offre une communication aisée entre plusieurs couches de tissu.

Par "tissage interlock", on entend ici une armure de tissage 3D dont chaque couche de chaîne lie plusieurs couches de trames avec tous les fils de la même colonne de chaîne ayant le même mouvement dans le plan de l'armure.

On peut aussi réaliser le coeur et la surface par tissage multicouches avec des armures différentes, notamment une armure de type satin en coeur et une armure de type toile ou sergé en surface.

Il est possible aussi de faire varier l'armure de tissage tridimensionnel dans la partie de coeur, par exemple en combinant différentes armures interlock, ou une armure interlock et une armure de tissage multicouches, ou encore différentes armures de tissage multicouches. Il est possible encore de faire varier l'armure de tissage le long de la surface extérieure.

Il peut être souhaitable d'utiliser des fils de natures chimiques différentes entre différentes parties de la structure fibreuse, notamment entre coeur et peau pour conférer des propriétés particulières à la pièce en matériau composite obtenue, notamment en termes de résistance à l'oxydation ou à l'usure.

Ainsi, dans le cas d'une pièce en matériau composite thermostructural à renfort de fibres réfractaires, on pourra utiliser une préforme avec des fibres de carbone dans le coeur et des fibres en céramique, par exemple en carbure de silicium (SiC), en surface afin d'accroître la résistance à l'usure et à l'oxydation de la pièce composite au niveau de cette partie de surface.

Un exemple de réalisation d'une structure fibreuse conformément à l'invention est maintenant décrit. Dans cet exemple, le tissage est réalisé sur un métier de type Jacquard.

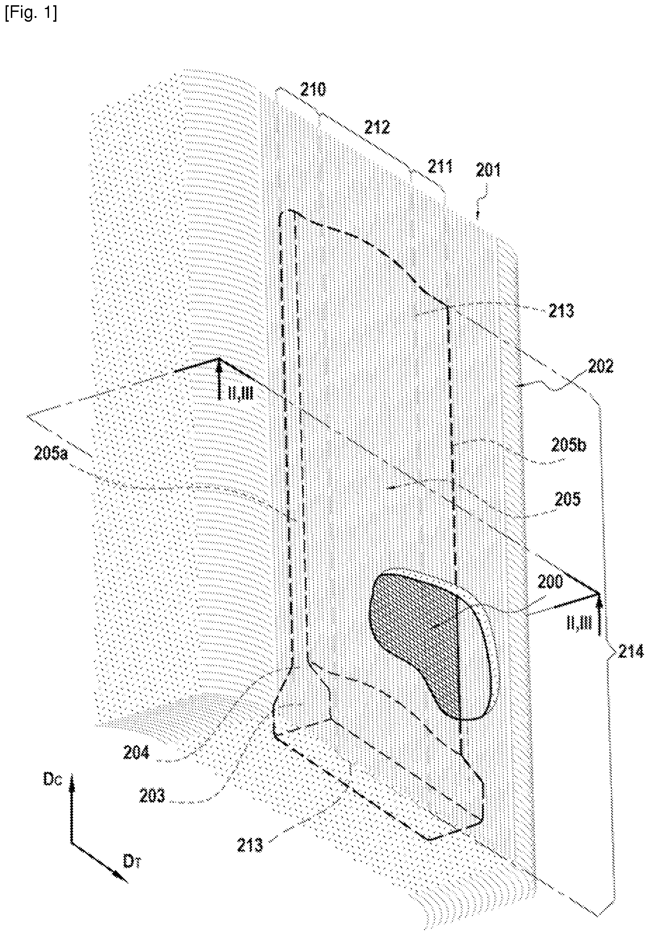

La figure 1 montre très schématiquement une structure fibreuse 200 destinée à former le renfort fibreux d'une aube de moteur aéronautique.

La structure fibreuse 200 est obtenue par tissage tridimensionnel, ou tissage 3D, ou par tissage multicouche réalisé de façon connue au moyen d'un métier à tisser de type jacquard sur lequel on a disposé un faisceau de fils de chaînes 201 en une pluralité de couches, les fils de chaînes étant liés par des couches de fils de trame 202 également disposés en une pluralité de couches, certaines couches de trames comprenant des tresses comme expliqué ci-après en détails. Un exemple détaillé de réalisation d'une préforme fibreuse destinée à former le renfort fibreux d'une aube pour moteur aéronautique est notamment décrit en détails dans les documents US 7 101 154, US 7 241 112 et WO 2010/061140.

La structure fibreuse 200 est tissée sous forme d'une bande s'étendant de façon générale dans une direction D_{C} correspondant à la direction des fils de chaîne 201 et de la direction longitudinale de l'aube à réaliser. La structure fibreuse présente une épaisseur variable à la fois dans la direction D_{C} et dans une direction D_{T} perpendiculaire à la direction D_{C} et correspondant à la direction des fils de trame 202. Les variations d'épaisseur sont déterminées en fonction de l'épaisseur longitudinale et du profil de la pale de l'aube à réaliser. Dans sa partie destinée à former une préforme de pied, la structure fibreuse 200 présente dans la direction D_{C} une partie de surépaisseur 203 déterminée en fonction de l'épaisseur du pied de l'aube à réaliser. La structure fibreuse 200 se prolonge par une partie d'épaisseur décroissante 204 destinée à former l'échasse de l'aube puis par une partie 205 destinée à former la pale de l'aube. La structure fibreuse 200 est tissée en une seule pièce et doit présenter, après découpe des fils non tissés, la forme et les dimensions quasi-définitives de l'aube (« net shape »). A cet effet, dans les parties de variations d'épaisseur de la structure fibreuse, comme dans la partie d'épaisseur décroissante 204, la diminution d'épaisseur de la préforme est obtenue en retirant progressivement des couches de trame au cours du tissage.

La partie 205 présente dans la direction D_{T} un profil à épaisseur variable entre son bord 205a destiné à former le bord d'attaque de l'aube et son bord 205b destiné à former le bord de fuite de l'aube à réaliser, une portion de surépaisseur (portion 212 sur la figure 1) étant présente entre les bords 205a et 205b.

Dans tout le texte qui suit et dans tous les dessins, il est mentionné et représenté par convention et souci de commodité, que ce sont les fils de trame qui sont déviés de leurs trajets pour saisir des fils ou tresses d'une couche de chaîne ou de plusieurs couches de chaîne. Toutefois, une inversion des rôles entre trame et chaîne est possible, et doit être considérée comme couverte aussi par les revendications.

Conformément à l'invention, lors du tissage, une déliaison 213 est réalisée à l'intérieur de la structure fibreuse 200 entre deux couches successives de fils de chaîne et sur une zone de déliaison 214 s'étendant sur toute la longueur de la structure fibreuse dans la direction D_{C} et sur une largeur déterminée suivant la direction D_{T} entre le bord 205a et le bord 205b, la zone de déliaison 214 étant en retrait des bords 205a et 205b. Plus précisément, la zone de déliaison 214 s'étend dans la direction D_{T} entre une première portion ou zone de liaison 210 présente du côté du bord 205a et une deuxième portion ou zone de liaison 211 présente du côté du bord 205b. Dans les première et deuxième portions 210 et 211, toutes les couches de fils de chaîne 201 sont liées entre elles par des fils de trame 202 de la pluralité de couches de fils de trame, les première et deuxième portions formant respectivement des premier et deuxième bords longitudinaux de la structure fibreuse.

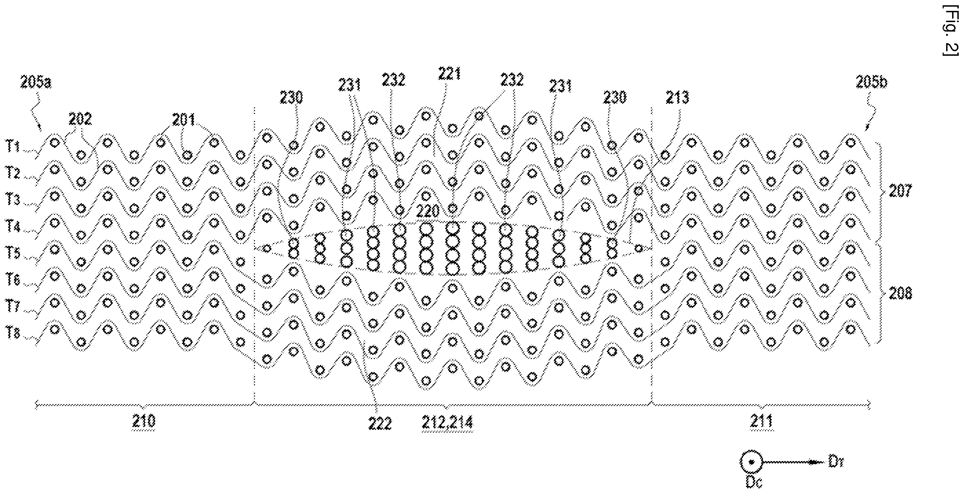

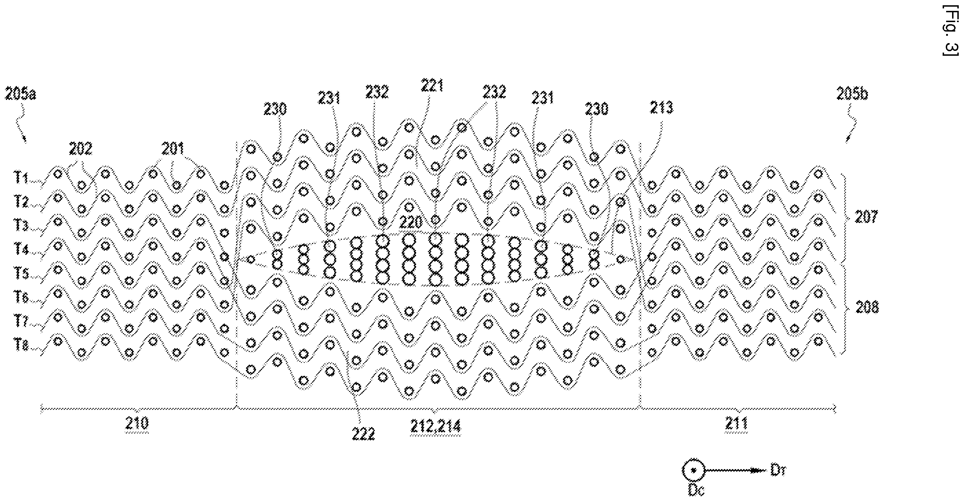

La zone de déliaison 214 permet de ménager un logement 220 à l'intérieur de la structure fibreuse 200 (figures 2 et 3) dont les dimensions sont déterminées en fonction de la mise en forme souhaitée pour la préforme de pale.

Un mode de tissage 3D à armure interlock de la structure fibreuse 200 est montré schématiquement par la figure 2.

La figure 2 est une vue partielle agrandie d'un plan en coupe chaîne dans une partie la structure fibreuse 200 comportant la zone de déliaison 204 (coupe II-II sur la figure 1). Dans cet exemple, la structure fibreuse 200 comprend 8 couches de fils de chaîne réparties en 16 demi-couches de fils de chaîne 201 disposés en quinconce et s'étendant sensiblement dans la direction D_{C}. Sur la figure 2, les couches de fils de chaîne sont liées par des fils de trame T₁ à T₈ dans les portions ou zones de liaison 210 et 211 de la structure fibreuse 200, les fils de trame s'étendant sensiblement dans la direction D_{T}. Dans la zone de déliaison 214, les 4 couches de fils de chaîne 201 formant l'ensemble de couches de fils 207 sont liées entre elles par 4 fils de trame T₁ à T₄, de même que les 4 couches de fils de chaîne formant l'ensemble de couches de fils 208 sont liées par 4 fils de trame T₅ et T₈. En d'autres termes, le fait que les fils de trame T₁ à T₄ ne s'étendent pas dans les couches de fils 208 et que les fils de trame T₅ à T₈ ne s'étendent pas dans les couches de fils 207 assure la déliaison 213 qui sépare l'un de l'autre les ensembles de couches de fils de chaîne 207 et 208.

Dans la zone de déliaison 214 de l'exemple de tissage présenté sur la figure 2, les fils de trame T₁ à T₄, d'une part, et les fils de trame T₅ à T₈, d'autre part, sont respectivement disposés de chaque côté de la déliaison 213, les fils de trame T₁ à T₄ liant les quatre premières couches de fils de chaîne formant l'ensemble de couches de fils 207 et les fils de trame T₅ à T₈ liant les quatre dernières couches de fils de chaîne formant l'ensemble de couches de fils 208. La zone de déliaison 214 sépare une première peau 221 d'une deuxième peau 222, chacune des peaux comprenant une partie de couches de fils de chaîne 201 liées entre elles par des fils de trame 202 de la pluralité de fils de trame. Les première et deuxième peaux 221 et 222 comprennent de préférence le même nombre de couches de fils de chaîne et le même nombre de couches de fils de trame.

Selon une variante de réalisation illustrée en figure 3 (coupe III-III sur la figure 1), une première partie de fils des couches de fils de trame croise une deuxième partie de fils des couches de fils de trame dans une zone de la structure fibreuse 200 située au voisinage de la zone de déliaison 214 suivant la direction D_{C}, les fils de la première partie de fils de trame 202 s'étendant d'un côté de la zone de déliaison 214 suivant la direction D_{C} tandis que les fils de la deuxième partie de fils de la pluralité de couches de fils de trame 202 s'étendent de l'autre côté de la zone de déliaison 214 suivant la direction D_{C}. Plus précisément, un ou plusieurs fils de trame 202 liant des couches de fils de chaîne formant l'ensemble de couches de fils 207 dans la première portion ou zone de liaison 210 sont utilisés pour lier des couches de fils de chaîne formant l'ensemble de couches de fils 208 dans la deuxième portion ou zone de liaison 211 et inversement. Dans l'exemple illustré sur la figure 2, les fils de trame T₃ et T₄, liant des couches de fils de chaîne 201 de l'ensemble de couches de fils 207 dans la première portion 210 sont déviés au début ou en amont de la zone de déliaison 214 suivant la direction D_{C} pour lier des couches de fils de chaîne 201 de l'ensemble de couches de fils 208. De même, les fils de trame T₅ et T₆, liant des couches de fils de chaîne 201 de l'ensemble de couches de fils 208 dans la première portion 210 sont déviés au début ou en amont de la zone de déliaison 214 suivant la direction D_{C} pour lier des couches de fils de chaîne 201 de l'ensemble de couches de fils 207. Après la zone de déliaison 214, les fils de trame T₃ et T₄ sont de nouveau déviés à la fin ou en aval de la zone de déliaison 214 suivant la direction D_{C}, c'est-à-dire à leur entrée dans la deuxième portion ou zone de liaison 211, pour lier des couches de fils de chaîne 201 de l'ensemble de couches de fils 208 tandis que les fils de trame T₅ et T₆ sont de nouveau déviés à la fin ou en aval de la zone de déliaison 214 suivant la direction D_{C}, c'est-à-dire à leur entrée dans la deuxième portion ou zone de liaison 211, pour lier des couches de fils de chaîne 201 de l'ensemble de couches de fils 207. Le croisement des fils de trame T₃ et T₄ et des fils de trame T₅ et T₆ en amont et/ou en aval de la zone de déliaison 214 suivant la direction DC permet d'améliorer la tenue de l'ébauche fibreuse dans la zone de déliaison. Selon une variante de réalisation, une partie des fils de trame peuvent se croiser seulement en amont ou en aval de la zone de déliaison 214 suivant la direction transversale D_{T}.

La zone de déliaison 214 sépare une première peau 221 d'une deuxième peau 222, chacune des peaux comprenant une partie de couches de fils de chaîne 201 liées entre elles par des fils de trame 202 de la pluralité de fils de trame. Les première et deuxième peaux 221 et 222 comprennent de préférence le même nombre de couches de fils de chaîne et le même nombre de couches de fils de trame.

Conformément à l'invention des torons 230, 231 et 232 s'étendent suivant la direction D_{C} dans le logement 220 illustré sur les figures 2 et 3, les torons ayant une taille supérieure ou égale à la taille des fils de chaîne 201 de la pluralité de couches de fils de chaîne de manière à conférer à la troisième portion une épaisseur supérieure à l'épaisseur des première et deuxième portions correspondant à la portion de surépaisseur (portion 212 sur les figures 1 à 3). Dans l'exemple décrit ici, le logement 220 est rempli avec des torons 230, 231 et 232 présentant respectivement une taille croissante. En fonction de la variation d'épaisseur et du taux de fibres souhaités, il est possible d'utiliser dans le logement 220 des torons de même taille, le nombre de torons par colonne de chaîne variant dans la direction D_{T} en fonction de la variation d'épaisseur. Il est également possible d'utiliser des torons de taille variable comme dans l'exemple décrit ici. Dans ce cas, la taille des torons, et éventuellement leur nombre, est ajusté pour chaque colonne de chaîne en fonction de la variation d'épaisseur souhaitée.

Les torons présents dans le logement délimité par la zone de déliaison peuvent correspondre à des fils ou à des tresses ayant une taille ou titre supérieur ou égal à la taille ou au titre des fils de chaîne de la pluralité de couches de fils de chaîne de la structure fibreuse. Les torons présents dans le logement peuvent également correspondre à un mélange de fils et de tresses ayant une taille ou titre supérieur ou égal à la taille ou au titre des fils de chaîne de la pluralité de couches de fils de chaîne de la structure fibreuse.

A titre d'exemple, la structure fibreuse peut être tissée avec des fils de chaîne ayant un titre de 0,5K (500 filaments) tandis que les torons présents dans le logement délimité par la zone de déliaison sont des fils et/ou des tresses ayant un titre compris entre 0,25K et 10K (250 et 10000 filaments). L'insertion de tresses dans le logement de la structure fibreuse permet d'augmenter de façon importante l'épaisseur de la structure fibreuse tout en contrôlant le taux moyen de fibres à coeur, et ce grâce à leur section transversale importante et leur capacité à conserver leur structure tubulaire (pas d'écrasement de la tresse lors de son tissage dans la structure fibreuse). Les tresses permettent donc de modérer le taux de fibres à coeur de la structure fibreuse et peuvent être utilisées en combinaison ou à la place de fils de titre important quand le taux de fibres obtenu avec ces derniers est trop important par rapport au taux visé.

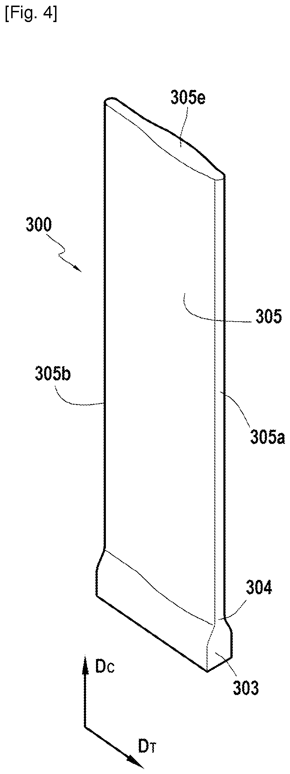

Une fois le tissage de la structure fibreuse 200 achevé, on découpe les fils non tissés au niveau des bordures de la structure. On obtient alors la préforme fibreuse 300 illustrée sur la figure 4 et tissée en une seule pièce. La préforme 300 comporte une partie de surépaisseur 303, correspondant à la partie 203 de la structure fibreuse 200, prolongée par une partie d'épaisseur décroissante 304 correspondant à la partie 204 de la structure fibreuse 200. La préforme 300 comprend également une partie de pale 305 correspondant à la partie 205 de la structure fibreuse 200 qui s'étend suivant la direction D_{T} entre une partie de bord d'attaque 305a et une partie de bord de fuite 205b correspondant respectivement aux bords 205a et 205b de la structure fibreuse 200. La partie de pale 305 présente en outre suivant la direction D_{T} une portion de surépaisseur 305e correspondant la portion 212 formée par introduction de torons de grande taille dans le logement 220 délimité par la zone de déliaison 214 dans la structure fibreuse 200 comme expliqué précédemment.

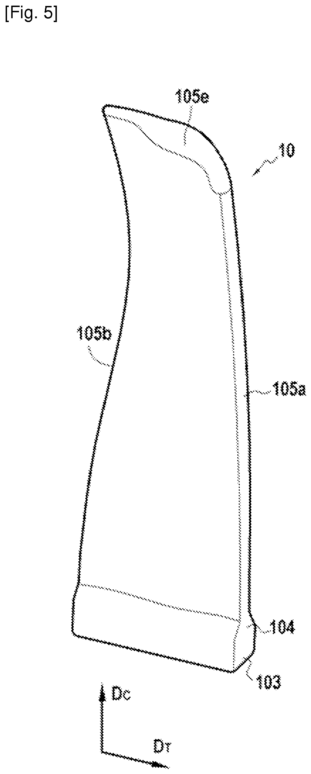

On procède ensuite à la densification de la préforme fibreuse 300 afin de former une aube 10 en matériau composite illustrée sur la figure 5. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou le procédé d'injection de charge céramique (Slurry Cast) ou le procédé d'imprégnation d'un alliage de silicium (MI ou RMI) ou encore suivant un enchaînement d'un ou plusieurs de ces procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC ou SiCN, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injectée la résine et les orifices d'évacuation de cette dernière afin de contrôler et d'optimiser l'imprégnation de la préforme par la résine.

La densification de la préforme peut encore être réalisée par imprégnation de polymère et pyrolyse (PIP), ou par imprégnation d'une barbotine (« slurry cast »), contenant par exemple du SiC et des liants organiques, suivie d'une infiltration avec du silicium liquide (« Melt infiltration »).

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au coeur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

Les procédés de densification décrits ci-avant permettent de réaliser, à partir de la structure fibreuse de l'invention, principalement des pièces en matériau composite à matrice organique (CMC), à matrice carbone (C/C) et à matrice céramique (CMC).

Dans le cas de la réalisation d'une pièce en matériau composite oxyde/oxyde, la structure fibreuse est imprégnée avec une barbotine chargée de particules d'oxyde réfractaire. Après élimination de la phase liquide de la barbotine, la préforme ainsi obtenue est soumise à un traitement thermique afin de fritter les particules et obtenir une matrice d'oxyde réfractaire. L'imprégnation de la structure peut être réalisée avec des procédés utilisant un gradient de pression, comme les procédés de type moulage par injection dits « RTM » ou aspiration de poudre submicronique dits « APS ».

Grâce à l'invention, la préforme à densifier présente avantageusement un ratio chaîne/trame identique tout autour du logement, ce qui permet une densification homogène de la préforme et l'obtention d'une pièce finale avec de bonnes propriétés mécaniques.

Après densification, on obtient une aube 10 en matériau composite qui, comme illustré sur la figure 5, comporte dans sa partie inférieure un pied 103 formé par la partie de surépaisseur 303 de la préforme fibreuse 300 qui se prolonge par une échasse 104 formée par la partie d'épaisseur décroissante 304 de la préforme 300 et une pale 105 formée par la partie de pale 305 de la préforme fibreuse 300. La pale 105 comporte un bord d'attaque 105a et un bord de fuite 105b correspondant respectivement aux parties de bord d'attaque 305a et de bord de fuite 305b de la préforme fibreuse 300 et une portion de surépaisseur 105e correspondant à la portion de surépaisseur 305e de la préforme fibreuse 300. La variation d'épaisseur créée par un nombre variable de fils de chaîne dans le logement est possible grâce à la formation d'une déliaison dans le sens chaîne avec tissage d'un certain nombre de fils de chaîne qui ne sont pas nécessaires à la pale de l'aube. Le pied 103 de l'aube conserve quant à lui une épaisseur constante puisque dans cette partie tous les fils de chaîne de titre variable sont présents.

La structure fibreuse et son procédé de fabrication selon la présente invention peuvent notamment être utilisés pour réaliser des aubes de turbomachine présentant une géométrie plus complexe que l'aube représentée sur la figure 5, comme des aubes comportant, en outre de celle de la figure 5, une ou plusieurs plateformes permettant de réaliser des fonction comme celles d'étanchéité de veine, d'anti-basculement, etc.. La structure fibreuse et son procédé de fabrication selon la présente invention peuvent par exemple être utilisés pour la fabrication de secteurs d'aube pour des distributeurs ou redresseurs de turbine à gaz.

## Revendications

1. Structure fibreuse (200) de renfort de pièce en matériau composite, ladite structure étant tissée en une seule pièce par tissage tridimensionnel ou multicouche entre une pluralité de couches de fils de trame (202) et une pluralité de couches de fils de chaîne (201), la structure fibreuse s'étendant suivant une direction longitudinale (D_{C}) correspondant au sens chaîne et suivant une direction transversale (D_{T}) correspondant au sens trame, **caractérisée en ce que** la structure fibreuse comprend suivant la direction transversale :
- des première et deuxième portions (210, 211) dans chacune desquelles toutes les couches de fils de chaîne (201) sont liées entre elles par des fils de trame (202) de la pluralité de couches de fils de trame, les première et deuxième portions formant respectivement des premier et deuxième bords longitudinaux de la structure fibreuse, et
- une troisième portion (212) présente entre les première et deuxième portions (210, 211), la troisième portion comprenant une zone de déliaison (214) délimitant un logement (220) à l'intérieur de la structure fibreuse (200) s'étendant sur une distance déterminée suivant la direction longitudinale (D_{C}) et suivant la direction transversale (D_{T}), la zone de déliaison séparant une première peau (221) d'une deuxième peau (222), chacune des peaux comprenant une partie de couches de fils de chaîne liées entre elles par des fils de trame de la pluralité de fils de trame,
et **en ce que** des torons (230, 231, 232) s'étendent dans le logement (220) suivant la direction longitudinale (D_{C}), les torons ayant une taille supérieure ou égale à la taille des fils de chaîne (201) de la pluralité de couches de fils de chaîne de manière à conférer à la troisième portion (212) une épaisseur supérieure à l'épaisseur des première et deuxième portions.

2. Structure fibreuse selon la revendication 1, dans laquelle les première et deuxième peaux (221, 222) comprennent le même nombre de couches de fils de chaîne et le même nombre de couches de fils de trame.

3. Structure fibreuse selon la revendication 1 ou 2, dans laquelle les torons (230, 231, 232) correspondent au moins en partie à des fils ayant un titre plus élevé que le titre des fils de chaîne (201) de la pluralité de couches de fils de chaîne.

4. Structure fibreuse selon l'une quelconque des revendications 1 à 3, dans laquelle les torons (230, 231, 232) correspondent au moins en partie à des tresses ayant une section supérieure à la section des fils de chaîne (201) de la pluralité de couches de fils de chaîne.

5. Pièce en matériau composite comprenant un renfort fibreux densifié par une matrice dans laquelle le renfort fibreux est formé par une structure fibreuse selon l'une quelconque des revendications 1 à 4.

6. Pièce selon la revendication 5, **caractérisée en ce qu'**elle constitue une aube (10) de moteur aéronautique.

7. Procédé de fabrication d'une structure fibreuse (200) de renfort de pièce en matériau composite comprenant le tissage en une seule pièce par tissage tridimensionnel ou multicouche entre une pluralité de couches de fils de trame (202) et une pluralité de couches de fils de chaîne (201), la structure fibreuse s'étendant suivant une direction longitudinale (D_{C}) correspondant au sens chaîne et suivant une direction transversale (D_{T}) correspondant au sens trame **caractérisé en ce que**, lors du tissage de la portion d'épaisseur décroissante, on définit suivant la direction transversale (DT) :
- des première et deuxième portions (210, 211) dans chacune desquelles toutes les couches de fils de chaîne (201) sont liées entre elles par des fils de trame (202) de la pluralité de couches de fils de trame, les première et deuxième portions formant respectivement des premier et deuxième bords longitudinaux de la structure fibreuse, et
- une troisième portion (212) présente entre les première et deuxième portions (210, 211), la troisième portion comprenant une zone de déliaison (214) délimitant un logement (220) à l'intérieur de la structure fibreuse s'étendant sur une distance déterminée suivant la direction longitudinale (D_{C}) et suivant la direction transversale (DT), la zone de déliaison (214) séparant une première peau (221) d'une deuxième peau (222), chacune des peaux comprenant une partie de couches de fils de chaîne liées entre elles par des fils de trame de la pluralité de fils de trame,
et **en ce que** des torons (230, 231, 232) sont introduits dans le logement (220) suivant la direction longitudinale (D_{C}), les torons ayant une taille supérieure ou égale à la taille des fils de chaîne (201) de la pluralité de couches de fils de chaîne de manière à conférer à la troisième portion (212) une épaisseur supérieure à l'épaisseur des première et deuxième portions (210, 211).

8. Procédé selon la revendication 7, dans laquelle les première et deuxième peaux (221, 222) comprennent le même nombre de couches de fils de chaîne et le même nombre de couches de fils de trame.

9. Procédé selon la revendication 7 ou 8, dans laquelle les torons (230, 231, 232) correspondent au moins en partie à des fils ayant un titre plus élevé que le titre des fils de chaîne (201) de la pluralité de couches de fils de chaîne.

10. Procédé selon l'une quelconque des revendications 7 à 9, dans laquelle les torons (230, 231, 232) correspondent au moins en partie à des tresses ayant une section supérieure à la section des fils de chaîne (201) de la pluralité de couches de fils de chaîne.

## Patentansprüche

1. Fasergebilde (200) zur Verstärkung eines Teils aus Verbundmaterial, wobei das Gebilde durch dreidimensionales oder mehrschichtiges Weben einteilig zwischen mehreren Schichten von Schussfäden (202) und mehreren Schichten von Kettfäden (201) gewebt ist, wobei das Fasergebilde sich entlang einer Längsrichtung (D_{C}), die der Kettrichtung entspricht, und entlang einer Querrichtung (D_{T}), die der Schussrichtung entspricht, erstreckt, **dadurch gekennzeichnet, dass** das Fasergebilde entlang der Querrichtung umfasst:
- einen ersten und zweiten Abschnitt (210, 211), wobei in jedem derselben alle Schichten von Kettfäden (201) miteinander durch Schussfäden (202) von den mehreren Schichten von Schussfäden verbunden sind, wobei der erste und zweite Abschnitt jeweils erste und zweite Längsränder des Fasergebildes bilden, und
- einen dritten Abschnitt (212), der zwischen dem ersten und zweiten Abschnitt (210, 211) vorhanden ist, wobei der dritte Abschnitt eine bindungslose Zone (214) umfasst, die eine Aufnahme (220) im Inneren des Fasergebildes (200) begrenzt, die sich über eine Distanz erstreckt, die entlang der Längsrichtung (D_{C}) und entlang der Querrichtung (D_{T}) bestimmt ist, wobei die bindungslose Zone eine erste Haut (221) von einer zweiten Haut (222) trennt, wobei jede der Häute einen Teil der Schichten von Kettfäden umfasst, die miteinander durch Schussfäden von den mehreren Schussfäden verbunden sind,
und dadurch, dass Litzen (230, 231, 232) sich in der Aufnahme (220) entlang der Längsrichtung (D_{C}) erstrecken, wobei die Litzen eine Größe aufweisen, die größer oder gleich der Größe der Kettfäden (201) von den mehreren Schichten von Kettfäden ist, derart dass dem dritten Abschnitt (212) eine Dicke verliehen wird, die größer als die Dicke des ersten und zweiten Abschnitts ist.

2. Fasergebilde nach Anspruch 1, wobei die erste und zweite Haut (221, 222) dieselbe Anzahl von Schichten von Kettfäden und dieselbe Anzahl von Schichten von Schussfäden umfassen.

3. Fasergebilde nach Anspruch 1 oder 2, wobei die Litzen (230, 231, 232) zumindest teilweise Fäden entsprechen, die einen höheren Titer aufweisen als den Titer der Kettfäden (201) von den mehreren Schichten von Kettfäden.

4. Fasergebilde nach einem der Ansprüche 1 bis 3, wobei die Litzen (230, 231, 232) zumindest teilweise Tressen entsprechen, die einen größeren Querschnitt als den Querschnitt der Kettfäden (201) von den mehreren Schichten von Kettfäden aufweisen.

5. Teil aus Verbundmaterial, das eine durch eine Matrix verdichtete Faserverstärkung umfasst, wobei die Faserverstärkung durch ein Fasergebilde nach einem der Ansprüche 1 bis 4 gebildet ist.

6. Teil nach Anspruch 5, **dadurch gekennzeichnet, dass** es eine Schaufel (10) eines Triebwerks darstellt.

7. Verfahren zur Herstellung eines Fasergebildes (200) zur Verstärkung eines Teils aus Verbundmaterial, umfassend das einteilige Weben durch dreidimensionales oder mehrschichtiges Weben zwischen mehreren Schichten von Schussfäden (202) und mehreren Schichten von Kettfäden (201), wobei das Fasergebilde sich entlang einer Längsrichtung (D_{C}), die der Kettrichtung entspricht, und entlang einer Querrichtung (D_{T}), die der Schussrichtung entspricht, erstreckt, **dadurch gekennzeichnet, dass** beim Weben des Abschnitts mit abnehmender Dicke entlang der Querrichtung (D_{T}) definiert werden:
- ein erster und zweiter Abschnitt (210, 211), wobei in jedem derselben alle Schichten von Kettfäden (201) miteinander durch Schussfäden (202) von den mehreren Schichten von Schussfäden verbunden sind, wobei der erste und zweite Abschnitt jeweils erste und zweite Längsränder des Fasergebildes bilden, und
- ein dritter Abschnitt (212), der zwischen dem ersten und zweiten Abschnitt (210, 211) vorhanden ist, wobei der dritte Abschnitt eine bindungslose Zone (214) umfasst, die eine Aufnahme (220) im Inneren des Fasergebildes begrenzt, die sich über eine Distanz erstreckt, die entlang der Längsrichtung (D_{C}) und entlang der Querrichtung (D_{T}) bestimmt ist, wobei die bindungslose Zone (214) eine erste Haut (221) von einer zweiten Haut (222) trennt, wobei jede der Häute einen Teil der Schichten von Kettfäden umfasst, die miteinander durch Schussfäden von den mehreren Schussfäden verbunden sind,
und dadurch, dass Litzen (230, 231, 232) in die Aufnahme (220) entlang der Längsrichtung (D_{C}) eingeführt sind, wobei die Litzen eine Größe aufweisen, die größer oder gleich der Größe der Kettfäden (201) von den mehreren Schichten von Kettfäden ist, derart dass dem dritten Abschnitt (212) eine Dicke verliehen wird, die größer als die Dicke des ersten und zweiten Abschnitts (210, 211) ist.

8. Verfahren nach Anspruch 7, wobei die erste und zweite Haut (221, 222) dieselbe Anzahl von Schichten von Kettfäden und dieselbe Anzahl von Schichten von Schussfäden umfassen.

9. Verfahren nach Anspruch 7 oder 8, wobei die Litzen (230, 231, 232) zumindest teilweise Fäden entsprechen, die einen höheren Titer aufweisen als den Titer der Kettfäden (201) von den mehreren Schichten von Kettfäden.

10. Verfahren nach einem der Ansprüche 7 bis 9, wobei die Litzen (230, 231, 232) zumindest teilweise Tressen entsprechen, die einen größeren Querschnitt als den Querschnitt der Kettfäden (201) von den mehreren Schichten von Kettfäden aufweisen.

## Claims

1. A fibrous structure (200) for reinforcing a composite material part, said structure being woven integrally by three-dimensional or multilayer weaving between a plurality of layers of weft threads (202) and a plurality of layers of warp threads (201), the fibrous structure extending in a longitudinal direction (D_{c}) corresponding to the warp direction and in a transverse direction (D_{T}) corresponding to the weft direction, **characterized in that** the fibrous structure comprises, in the transverse direction:
- first and second portions (210, 211) in each of which all the layers of warp threads (201) are bound together by weft threads (202) of the plurality of layers of weft threads, the first and second portions respectively forming first and second longitudinal edges of the fibrous structure, and
- a third portion (212) present between the first and second portions (210, 211), the third portion comprising a debonding zone (214) delimiting a housing (220) inside the fibrous structure (200) extending over a determined distance in the longitudinal direction (D_{c}) and in the transverse direction (D_{T}), the separation zone separating a first skin (221) from a second skin (222), each of the skins comprising a portion of layers of warp threads bound together by weft threads of the plurality of weft threads,
and **in that** strands (230, 231, 232) extend in the housing (220) in the longitudinal direction (D_{c}), the strands having a size greater than or equal to the size of the warp threads (201) of the plurality of layers of warp threads so as to give the third portion (212) a thickness greater than the thickness of the first and second portions.

2. The fibrous structure according to claim 1, wherein the first and second skins (221, 222) comprise the same number of layers of warp threads and the same number of layers of weft threads.

3. The fibrous structure according to claim 1 or 2, wherein the strands (230, 231, 232) correspond at least partly to threads having a higher count than the count of the warp threads (201) of the plurality of layers of warp threads.

4. The fibrous structure according to any one of claims 1 to 3, wherein the strands (230, 231, 232) correspond at least partly to braids having a section greater than the section of the warp threads (201) of the plurality of layers of warp threads.

5. A part made of composite material comprising a fibrous reinforcement densified by a matrix wherein the fibrous reinforcement is formed by a fibrous structure according to any one of claims 1 to 4.

6. The part according to claim 5, **characterized in that** it constitutes a blade (10) of an aeronautical engine.

7. A method for manufacturing a fibrous structure (200) for reinforcing a composite material part comprising integrally weaving by three-dimensional or multilayer weaving a plurality of layers of weft threads (202) and a plurality of layers of warp threads (201), the fibrous structure extending in a longitudinal direction (D_{c}) corresponding to the warp direction and in a transverse direction (D_{T}) corresponding to the weft direction **characterized in that**, during weaving of the portion with the decreasing thickness, are defined in the transverse direction (DT):
- first and second portions (210, 211) in each of which all the layers of warp threads (201) are bound together by weft threads (202) of the plurality of layers of weft threads, the first and second portions respectively forming first and second longitudinal edges of the fibrous structure, and
- a third portion (212) present between the first and second portions (210, 211), the third portion comprising a debonding zone (214) delimiting a housing (220) inside the fibrous structure extending over a determined distance in the longitudinal direction (D_{c}) and in the transverse direction (D_{T}), the separation zone (214) separating a first skin (221) from a second skin (222), each of the skins comprising a portion of layers of warp threads bound together by weft threads of the plurality of weft threads,
and **in that** strands (230, 231, 232) are introduced into the housing (220) in the longitudinal direction (D_{c}), the strands having a size greater than or equal to the size of the warp threads (201) of the plurality of layers of warp threads so as to give the third portion (212) a thickness greater than the thickness of the first and second portions (210, 211).

8. The method according to claim 7, wherein the first and second skins (221, 222) comprise the same number of layers of warp threads and the same number of layers of weft threads.

9. The method according to claim 7 or 8, wherein the strands (230, 231, 232) correspond at least partly to threads having a higher count than the count of the warp threads (201) of the plurality of layers of warp threads.

10. The method according to any one of claims 7 to 9, wherein the strands (230, 231, 232) correspond at least partly to braids having a section greater than the section of the warp threads (201) of the plurality of layers of warp threads.
